# EUROPÄISCHE PATENTANMELDUNG

(11) **EP 1 400 309 A1**
(43) Veröffentlichungstag der Anmeldung: **24.03.2004**
(21) Anmeldenummer: 03017891.7
(22) Anmeldetag: 19.10.2000
(51) Int. Cl.: B23Q 17/09, B23Q 17/22, B23Q 17/24, G01V 8/12, G01B 11/00

(54) **Verfahren und Vorrichtung zum Prüfen einer Schneidengeometrie eines drehantreibbaren Werkzeugs**

(30) Priorität: 19.10.1999 DE 19950331
(62) Teilanmeldung aus: 00975886.3
(71) Anmelder: Blum-Novotest GmbH, 88287 Grünkraut (DE)
(72) Erfinder: Bucher, Heribert, 88069 Tettnang (DE); Riedter, Bruno, 88250 Weingarten (DE)
(74) Vertreter: Röthinger, Rainer

(57) **Zusammenfassung**

Die Prüfung einer Schneidengeometrie eines Werkzeug (20) findet während Zeitintervallen statt, die Zeitpunkte umfassen, an denen zu erwarten ist, dass ein zu prüfender Bereich (32) des Werkzeugs (20) in einen Messstrahl (14) eintaucht. An Zeitpunkten, an denen das Werkzeug (20) nicht in den Messstrahl (14) eintaucht, werden keine Messungen durchgeführt, wodurch die Zuverlässigkeit der Prüfung erhöht und Fehlmessungen vermieden werden. Hierfür wird ein Meßsystem (10-18) verwendet, das vorzugsweise programmierbare Einheiten umfasst, um die Erfindung flexibel bei unterschiedlichen Werkzeugmaschinen und Werkzeugen ohne Änderungen des Aufbaus des Meßsystems einzusetzen.

## Beschreibung

Die Erfindung betrifft ein Verfahren zum Prüfen einer Schneidengeometrie eines drehantreibbaren Werkzeugs und eine Vorrichtung zur Durchführung des erfindungsgemäßen Verfahrens. Insbesondere betrifft die Erfindung die Prüfung einer Schneidengeometrie eines Werkzeugs zur Bruch- und Verschleißkontrolle mittels eines Messstrahls.

Die Verwendung von Messsystemen zum Prüfen von drehantreibbaren Werkzeugen unter Verwendung eines Messstrahls, insbesondere eines optischen Messstrahls, ist bekannt. So wird in DE 42 38 504 ein Verfahren beschrieben, das unter Verwendung eines dünnen Laserstrahls die Länge und den Durchmesser eines Werkzeugs sowie Rundheitsfehler vermisst. Auf diese Weise kann nicht nur die Einstellung des Werkzeugs überprüft, sondern auch Verschleiß oder ein Bruch des Werkzeugs erkannt werden. Hierbei wird das Werkzeug einer optischen Messebene senkrecht zu der Messebene zugestellt. Das Meßsystem gibt ein Signal aus, das angibt, ob das Werkzeug in die Messebene eintaucht. Beim Eintauchen des Werkzeugs wird dessen relative Lage gegenüber der Messebene bestimmt, um unter Verwendung von Referenzpunkten die Maße des Werkzeugs zu berechnen. Um zusätzlich die Rundheit und den Durchmesser des Werkzeugs zu bestimmen, wird das sich drehende Werkzeug der Mess-ebene auch parallel zur Messebene zugeführt.

Um Beeinträchtigungen des Messvorgangs aufgrund von Verunreinigungen der Luft in einem Messbereich eines optischen Meßsystems zu vermeiden, wird gemäß DE 42 44 869 nur dann ein Signal erzeugt, das das Eintauchen eines Werkzeugs in die Messebene angibt, wenn ein drastischer Signalabfall in einem als Messstrahl verwendeten Laserstrahl detektiert wird. Zusätzlich werden von dem Meßsystem Vergleichswerte aufgenommen, die als Referenzwerte für einzelne Messvorgänge dienen und den Messvorgang beeinträchtigende Störeinflüsse reduzieren sollen.

Des Weiteren ist in DE 32 18 754 ein Verfahren zur Längenmessung eines drehantreibbaren Werkzeugs offenbart. Hierbei passiert das Werkzeug eine optische Messeinrichtung, wobei die Position des Werkzeugs bestimmt wird, wenn die Werkzeugspitze eine Messebene der optischen Messeinrichtung passiert. Durch einen Vergleich der gemessenen Position mit einer Soll-Position des Werkzeugs kann die Länge des Werkzeugs berechnet werden. Auf diese Weise ist es auch möglich, festzustellen, ob das Werkzeug gebrochen ist.

Bei der industriellen Anwendung dieser beschriebenen Verfahren hat sich gezeigt, dass aufgrund von Verschmutzungen, z.B. durch Kühlmittel oder Metallspäne, in den Messbereichen der verwendeten optischen Meßsysteme fehlerhafte oder nicht zufriedenstellende Messungen auftreten. Des weiteren müssen die verwendeten optischen Meßsysteme in Abhängigkeit der verwendeten Werkzeuge sowie deren Drehzahl für den jeweiligen Anwendungsfall neu eingestellt werden. Außerdem erlaubt keines dieser bekannten Verfahren eine Kontrolle einzelner Schneiden eines Werkzeugs sowie eine vollständige Überprüfung der Geometrie eines Werkzeugs.

Aus der DE 39 05 949 A1 ist ein Meßsystem zum Prüfen einer Schneidengeometrie bekannt, bei dem Abschattungen eines Messstrahls durch Hindernisse auf seinem Ausbreitungsweg erfasst und ausgewertet werden. Die Berücksichtigung von Soll-Zeitpunkten und Detektions-Zeitpunkten ist dort nicht vorgesehen.

Gemäß der DE 692 23 544 T2 werden Störungen beim optischen Vermessen des Profils eines Objektes dadurch beseitigt, dass die optische Abtastung des Objektes mittels eines Laserstrahls auf vorbestimmte Zeitintervalle eingeschränkt wird. Hierfür wird der Laserstrahl in einem Beleuchtungszeitintervall leuchten gelassen, während in einem Ausschalt-Zeitintervall der Laserstrahl ausgeschaltet ist. Hierzu synchron wird eine Ausleseeinrichtung zum Empfangen des Laserstrahls betrieben, um einen synchronen Auslese-Abtastbetrieb von Lichtempfangselementen abwechselnd zu wiederholen.

Die DD 245 481 A1 offenbart ein Verfahren und eine Anordnung zur fotoelektrischen Lagebestimmung von Kanten an rotierenden Prüflingen bezüglich deren Drehachse. Hierbei wird während einer ersten Umdrehung diejenige Drehstellung des Prüflings relativ zu einem Fotoempfänger mittels eines optischen Messverfahrens bestimmt, in der eine vorgegebene Kante des Prüflings vom Fotoempfänger erfasst wird. Während weiterer Umdrehungen des Prüflings werden mittels eines hochauflösenden langsamen Verfahrens nur die Fotoempfängersignale ausgewertet, die in der zuvor bestimmten Drehstellung des Prüflings erfasst werden.

Daher ist es Aufgabe der Erfindung, bei der Prüfung eines drehantreibbaren Werkzeugs Störeinflüsse in einer Messebene eines Meßsystems zu eliminieren.

Um eine gewünschte Bearbeitungsqualität mit einem drehantreibbaren Werkzeug zu ermöglichen, ist sicherzustellen, dass die verwendeten Werkzeuge bestimmte Eigenschaften aufweisen. Zu diesen Eigenschaften zählen unter anderem die Positionierung eines Werkzeugs in einer entsprechenden Haltevorrichtung der Werkzeugmaschine sowie die Geometrie des Werkzeugs selbst. Mit Hilfe des erfindungsgemäßen Verfahrens wird es möglich, ein drehantreibbares Werkzeug hinsichtlich seiner tatsächlichen Gestalt zu überprüfen. Hierfür wird ein zu prüfender Bereich auf dem Werkzeug festgelegt, beispielsweise der Bereich der Schneiden des Werkzeugs. Das Werkzeug wird mit einer gewünschten Drehzahl gedreht und in einen Messbereich eingebracht, der von einem Messstrahl definiert wird. Aufgrund der Drehung des Werkzeugs kann der Messstrahl auf den zu prüfenden Bereich des Werkzeugs fallen, es ist aber auch möglich, dass der Messstrahl nicht auf den zu prüfenden Bereich fällt. Neben dieser Wechselwirkung mit dem zu prüfenden Bereich können auch Wechselwirkungen zwischen dem Messstrahl und anderen in dem Messbereich befindlichen Medien oder Stoffen auftreten, beispielsweise mit herabtropfender Kühlflüssigkeit oder Metallspänen. Um das Werkzeug zu prüfen, werden die Wechselwirkungen des Messstrahls mit dem zu prüfenden Bereich detektiert. Dabei ist zu vermeiden, dass Wechselwirkungen zwischen dem Messstrahl und den anderen Stoffen oder Medien Fehlmessungen verursachen.

Dies wird erfindungsgemäß dadurch vermieden, dass die Detektion nur während Zeitintervallen stattfindet, die Zeitpunkte umfassen, an denen zu erwarten ist, dass der zu prüfende Bereich während der Drehung in den Messstrahl eintaucht. Unter Verwendung einer vorgegebenen Teilung, die im folgenden als Soll-Teilung bezeichnet wird, eines dem zu prüfenden Werkzeug entsprechenden Referenzwerkzeugs werden derartige Zeitpunkte ermittelt. Diese ermittelten Zeitpunkte werden im folgenden als Soll-Zeitpunkte bezeichnet. Danach wird die Detektion während gewählter Detektions-Intervalle durchgeführt, die jeweils einen Soll-Zeitpunkt umfassen, um auf der Basis von auftretenden oder nicht auftretenden optischen Wechselwirkungen zu überprüfen, ob das Werkzeug die Soll-Teilung aufweist oder beschädigt ist.

Hierbei ist es vorgesehen, dass die Detektions-Zeitintervalle so gewählt werden, dass sie sich zeitlich nicht überlappen. Des weiteren können die Detektions-Zeitintervalle so gewählt werden, dass sie den entsprechenden Soll-Zeitpunkt symmetrisch umfassen.

Werkzeuge, die als Referenzwerkzeuge für zu prüfende Werkzeuge verwendet werden, umfassen reale Werkzeuge, deren Maße den für das zu prüfende Werkzeug gewünschten Maßen entsprechen, z.B. unbeschädigte oder neue Werkzeuge, aber auch sogenannte "virtuelle Werkzeuge". Unter "virtuellen Werkzeugen sind hier nicht die Werkzeuge im eigentlichen Sinn zu verstehen, sondern die formale Beschreibung der Maße der Werkzeuggeometrie. Die formale Beschreibung kann z.B. durch mathematische Formeln und/oder Daten erfolgen. Da die Erfindung, wie weiter unten beschrieben wird, auch programmierbare Komponenten umfassen kann, ist die Verwendung "virtueller" Referenzwerkzeuge in Form von Daten zu bevorzugen, die z.B. rechnergestützt gespeichert und verarbeitet werden.

Die Größe der gewählten Detektions-Zeitintervalle ist in Abhängigkeit des jeweiligen Anwendungsfalls möglichst klein zu wählen, um die Detektion auf einen Zeitbereich zu beschränken, der möglichst kurz vor einem Soll-Zeitpunkt beginnt und möglichst kurz danach endet. Auf diese Weise wird die Zuverlässigkeit der Werkzeugprüfung erhöht. Vorzugsweise werden die Detektions-Zeitintervalle so klein gewählt, dass sie den entsprechenden Soll-Zeitpunkt nur mit geringem Zeitüberschuss enthalten.

Vorzugsweise sollen die Soll-Zeitpunkte und/oder Detektions-Zeitintervalle in Abhängigkeit von der Drehzahl des Werkzeugs bestimmt werden. Darüber hinaus ist es vorteilhaft, wenn die Soll-Zeitpunkte und/oder Detektions-Zeitintervalle unter Berücksichtigung der Soll-Teilung bestimmt werden.

In einer bevorzugten Ausführungsform der Erfindung werden die Detektionszeitpunkte, die zur Synchronisation der Detektion mit dem zu prüfenden, sich drehenden Werkzeug erforderlich sind, bestimmt, indem in Abhängigkeit der Soll-Teilung ein Soll-Zeitintervall bestimmt wird. Dieses Soll-Zeitintervall gibt den zeitlichen Abstand zwischen zwei Zeitpunkten an, an denen zu erwarten ist, dass unterschiedliche Bereiche des zu prüfenden Bereichs des Werkzeugs in den Messstrahl eintauchen. Danach werden die Signale detektiert, die Wechselwirkungen des Messstrahls mit Hindernissen auf seinem Ausbreitungsweg angeben, wobei das Detektieren solange durchgeführt wird, bis wenigstens zwei aufeinanderfolgende derartige Signale detektiert werden, deren zeitlicher Abstand mit dem vorbestimmten Soll-Zeitintervall übereinstimmt.

Darüber hinaus ist es möglich, das Detektieren nach einem letzten im Soll-Zeitintervall detektierten Signal zu beginnen, wobei der zeitliche Abstand der Soll-Zeitpunkte dem Soll-Zeitintervall entspricht.

Um Werkzeuge unregelmäßiger Geometrie zu prüfen, ist es möglich, in Abhängigkeit einer Soll-Teilung des Werkzeugs, die in diesem Fall eine unregelmäßige Teilung ist, eine Folge Soll-Zeitintervalle festzulegen. Nachfolgend werden die Signale, die Wechselwirkungen des Messstrahls mit Hindernissen auf seinem Ausbreitungsweg angeben, solange detektiert, bis wenigstens zwei aufeinanderfolgende Signale detektiert werden, deren zeitlicher Abstand einem der Soll-Zeitintervalle der festgelegten Folge entspricht. Vorzugsweise wird bei den oben beschriebenen Ausführungsformen der Erfindung die Detektion kontinuierlich durchgeführt.

Somit wird es ermöglicht, das erfindungsgemäße Detektieren nach einem letzten in einem der Soll-Zeitintervalle detektierten Signale zu beginnen. Die Detektion erfolgt dann erfindungsgemäß zu den Soll-Zeitpunkten, deren zeitliche Abstände hier eine Folge haben, die der festgelegten Folge der Soll-Zeitintervalle entspricht.

Des weiteren ist zu bevorzugen, dass das zu prüfende Werkzeug in dem Messbereich positioniert wird, indem ein Eintauchen der Hüllfläche des zu prüfenden Bereichs, die sich aus der Drehung des Werkzeugs ergibt, unter Verwendung des Messstrahls detektiert wird.

Es ist auch möglich, in Antwort auf die erfindungsgemäße Detektion ein Ergebnissignal zu erzeugen, um ein Gesamtergebnis der Prüfung des Werkzeugs anzugeben. So ist es möglich, ein Ergebnissignal zu erzeugen, das eine erfolgreiche summarische Prüfung des Werkzeugs angibt, wenn eine Anzahl der zu den Soll-Zeitpunkten detektierten Signale über einer vorbestimmten Anzahl liegt oder die vorbestimmte Anzahl exakt erreicht.

Bei einer weiteren Ausführungsform der Erfindung wird die Bestimmung der Soll-Zeitpunkte erneut durchgeführt, wenn die Anzahl der zu den Soll-Zeitpunkten detektierten Signale unter der vorbestimmten Anzahl liegt. Ergänzend kann ein Ergebnissignal erzeugt werden, das eine nicht erfolgreiche Prüfung des Werkzeugs angibt, wenn die Anzahl der zu den Soll-Zeitpunkten detektierten Signale unter der vorbestimmten Anzahl liegt.

Zusätzlich ist es möglich, eine Detektionsdauer festzulegen, für die das Detektieren zu den Soll-Zeitpunkten durchgeführt wird.

Außerdem kann eine Bestimmungsdauer gewählt werden, die den Zeitraum angibt, in dem das Bestimmen der Soll-Zeitpunkte durchgeführt wird. So kann dann ein Ergebnissignal erzeugt werden, das eine nicht erfolgreiche summarische Prüfung des Werkzeugs angibt, wenn die Bestimmung der Soll-Zeitpunkte länger als die gewählte Bestimmungsdauer durchgeführt wird.

Die Detektionsdauer und/oder die Bestimmungsdauer können dabei in Abhängigkeit der Rotation des Werkzeugs und/oder in Abhängigkeit der Soll-Teilung bestimmt werden.

Um nicht nur einen einzelnen Bereich des Werkzeugs zu prüfen, sondern mehrere Bereiche des Werkzeugs oder das gesamte Werkzeug zu prüfen, wird nach Ablauf der Prüfung das erfindungsgemäße Verfahren wiederholt. Hierbei wird nach Abschluss der Prüfung eines Bereichs das Werkzeug relativ zu dem Messbereich so verfahren, dass eine durch die Drehung entstehende Hüllfläche eines weiteren zu prüfenden Bereichs in den Messbereich eintaucht bzw. in demselben liegt. Danach werden die erfindungsgemäß folgenden Prüfschritte erneut durchgeführt. Diese Vorgehensweise wird für jeden zu prüfenden Bereich wiederholt, wobei jeder weitere zu prüfende Bereich des Werkzeugs vorzugsweise dem zuvor geprüften Bereich benachbart ist.

Alternativ zu diesem Prüfen mehrerer Bereiche oder in Kombination damit können mehrere benachbarte Bereiche, größere zusammenhängende Bereiche des Werkzeugs oder das gesamte Werkzeug geprüft werden, wenn zusätzlich zur Drehung des Werkzeugs dasselbe gleichzeitig relativ zu dem Messbereich bewegt wird, z.B. senkrecht zu dem Messbereich, so dass eine durch die Drehung und die Relativbewegung des Werkzeugs entstehende Hüllfläche für die zu prüfenden benachbarten Bereiche bzw. des zu prüfenden zusammenhängenden Bereichs in den Messbereich eintaucht bzw. in demselben liegt.

Zum Ausführen des erfindungsgemäßen Verfahrens wird ein Meßsystem verwendet, das einen Sender zum Aussenden eines Messstrahls, einen Empfänger zum Empfangen des Messstrahls und zum Ausgeben von Signalen, die einen empfangenen Messstrahl angeben, eine mit dem Empfänger verbundene Auswerteeinheit zum Empfangen der von dem Empfänger ausgegebenen Signale und zum Erzeugen von Signalen, die Wechselwirkungen des Messstrahls mit Hindernissen auf seinem Ausbreitungsweg angeben, in Abhängigkeit der empfangenen Signale und eine Steuereinheit zur Steuerung des Meßsystems aufweist.

In einer Ausführungsform der Erfindung ist die Auswerteeinheit geeignet, die Signale des Empfängers nur während gewählter Auswerte-Zeitintervalle auszuwerten, in denen Soll-Zeitpunkte liegen, an denen ein dem zu prüfenden Bereich entsprechender Bereich eines eine Soll-Teilung aufweisenden Referenzwerkzeugs in den Messstrahl eintaucht.

Bei einer anderen Ausführungsform empfängt der Empfänger den Messstrahl nur während gewählter Empfangs-Zeitintervalle, in denen jeweils nur ein Soll-Zeitpunkt liegt, an dem ein dem zu prüfenden Bereich entsprechender Bereich eines eine Soll-Teilung aufweisenden Referenzwerkzeugs in den Messstrahl eintaucht.

Bei einer weiteren Ausführungsform sendet der Sender den Messstrahl nur während gewählter Sende-Zeitintervalle aus, in denen jeweils ein Soll-Zeitpunkt liegt, an dem ein dem zu prüfenden Bereich entsprechender Bereich eines eine Soll-Teilung aufweisenden Referenzwerkzeugs in den Messstrahl eintaucht.

Weitere Ausführungsformen der Erfindung ergeben sich als Kombinationen einzelner oder mehrerer der oben genannten Ausführungsformen des erfindungsgemäßen Meßsystems.

Um eine kompakte Bauform zu erzielen, können die Steuereinheit und/oder die Auswerteeinheit in dem Sender und/oder dem Empfänger integriert werden.

Um das erfindungsgemäße Meßsystem flexibel einsetzen zu können, sollte die Auswerteeinheit und/oder die Steuereinheit programmierbar sein.

Außerdem ist es wünschenswert, das Meßsystem bzw. vorzugsweise die Steuereinheit mit einer das zu prüfenden Werkzeug drehenden Maschine bzw. deren Steuerung zu verbinden, um z.B. Informationen über die Drehzahl, Form des Werkzeugs, gewünschte Bearbeitungsvorgänge und deren Genauigkeit sowie mit dem erfindungsgemäßen Meßsystem durchgeführten Prüfungen des Werkzeugs auszutauschen.

Der Messstrahl kann ein beliebiger Strahl sein, der in Wechselwirkung mit einem zu prüfenden Werkzeug und mit anderen Hindernissen auf seinem Ausbreitungsweg treten kann und der eine Detektion der Wechselwirkungen mit einem entsprechenden Empfänger oder Detektor ermöglicht. So kann der Messstrahl ein optischer Messstrahl, ein elektro-magnetischer Messstrahl, ein Korpuskel-Meßstrahl oder eine Kombination dieser Messstrahlen sein. Angesichts der verfügbaren Komponenten, die zum Erzeugen, Aussenden und Detektieren von Messstrahlen erforderlich sind, sowie deren Komplexität und Kosten, ist der Messstrahl vorzugsweise ein optischer Messstrahl und insbesondere ein Laserlichtstrahl.

Da bei dem erfindungsgemäßen Verfahren die Prüfung des Werkzeugs im wesentlichen an den sogenannten Soll-Zeitpunkten stattfindet, an denen zu erwarten ist, dass der zu prüfende Bereich des Werkzeugs in den Messstrahl eintaucht, werden Fehlmessungen vermieden, die auf Wechselwirkung zurückzuführen sind, die keine Wechselwirkungen des Messstrahls mit dem zu prüfenden Bereich sind. Des weiteren ermöglicht es die Erfindung durch die Verwendung programmierbarer Steuer- und Auswerteeinheiten, die Prüfung eines Werkzeugs einer Werkzeugmaschine anwendungsspezifisch auf das jeweilig verwendete Werkzeug und die jeweilig verwendete Werkzeugmaschine flexibel anzupassen. So können Werkzeuge geprüft werden, die sich mit unterschiedlichen Drehzahlen drehen und die verschiedenste, auch unregelmäßige Geometrien und Teilungen aufweisen.

Ausführungsbeispiele der Erfindung werden im folgenden anhand schematischer Zeichnungen mit weiteren Einzelheiten erläutert. Es zeigen:
- Fig. 1: eine Anordnung des erfindungsgemäßen Meßsystems und einem zu prüfenden Werkzeug in einer Spindel einer Werkzeugmaschine vor dem erfindungsgemäßen Prüfen,
- Fig. 2: die Anordnung aus Fig. 1 während der erfindungsgemäßen Prüfung des Werkzeugs,
- Fig. 3: einen Querschnitt eines zu prüfenden Werkzeugs quer zu dessen Längsachse, wobei der Querschnitt dem zu prüfenden Bereich des Werkzeugs entspricht,
- Fig. 4: eine Aufsicht auf das erfindungsgemäße Meßsystem und den zu prüfenden Bereich des Werkzeugs aus Fig. 3 vor einem Eintauchen in einen Messbereich,
- Fig. 5: eine schematische Aufsicht auf das erfindungsgemäße Meßsystem und den zu prüfenden Bereich des Werkzeugs aus Fig. 3 bei dem Eintauchen in den Messbereich,
- Fig. 6: eine schematische Darstellung der Position des Werkzeugs relativ zu dem Messstrahl in Abhängigkeit von der Lage des Prüfbereichs auf dem Werkzeugs,
- Fig. 7: einen Signalverlauf von erfindungsgemäß detektierten Signalen und die dazugehörigen Positionen eines Werkzeugs mit regelmäßiger Querschnittsgeometrie in der erfindungsgemäßen Messanordnung,
- Fig. 8: einen Signalverlauf von erfindungsgemäß detektierten Signalen sowie die entsprechenden Positionen eines Werkzeugs mit unregelmäßiger Querschnittsgeometrie in dem erfindungsgemäßen Meßsystem,
- Fig. 9: einen Signalverlauf von erfindungsgemäß detektierten Signalen und die dazugehörigen Positionen eines fehlerhaften Werkzeugs mit regelmäßiger Querschnittsgeometrie in der erfindungsgemäßen Messanordnung, und
- Fig. 10: einen Signalverlauf von erfindungsgemäß detektierten Signalen sowie die entsprechenden Positionen eines fehlerhaften Werkzeugs mit unregelmäßiger Querschnittsgeometrie in dem erfindungsgemäßen Meßsystem.

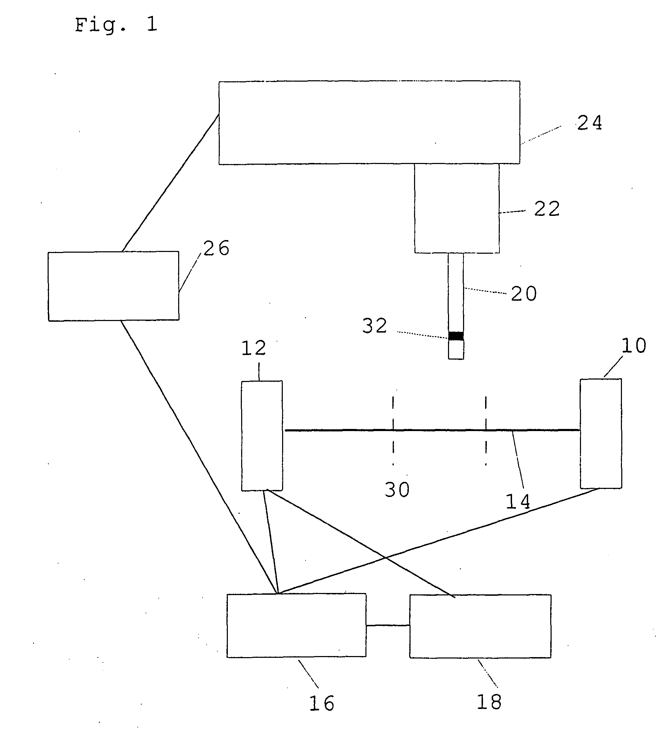

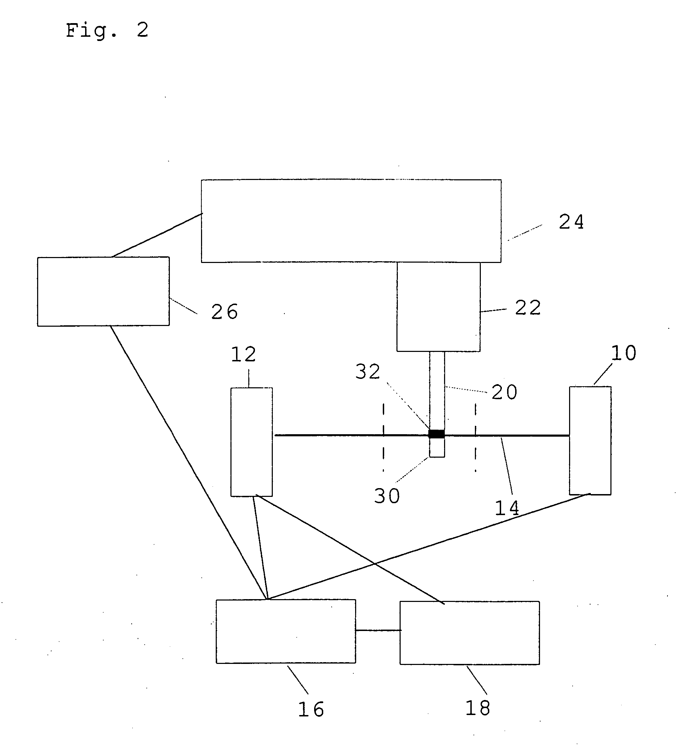

Die in Fig. 1 und 2 vereinfachte Darstellung einer erfindungsgemäßen Anordnung umfasst im wesentlichen ein Meßsystem 10, 12, 14, 16, 18 und eine Werkzeugmaschine, von der lediglich ein zu prüfendes Werkzeug 20, eine das Werkzeug 20 haltende Spindel 22, ein die Spindel 22 antreibender Spindelmotor 24 und eine Steuerung 26 gezeigt sind. Das Meßsystem umfasst einen Sender 10, einen Empfänger 12, der einen vom Sender 10 ausgesendeten Messstrahl 14 empfängt, sowie eine Steuereinheit 16 und eine Auswerteeinheit 18, die mit dem Sender 10 und dem Empfänger 12 verbunden sind.

Der hier verwendete Messstrahl 14 ist ein Laserlichtstrahl, es ist aber auch möglich, jeden zum Messen geeigneten optischen Strahl, elektromagnetische Messstrahlen, Korpuskel-Messstrahlen oder Kombinationen dieser Messstrahlen zu verwenden.

Der Bereich des Messstrahls 14 zwischen dem Sender 10 und dem Empfänger 12 entspricht dem Bereich des Meßsystems, in dem eine Prüfung eines Werkzeugs durchgeführt wird. In Abhängigkeit der Abmessungen zu prüfender Werkzeuge ist der Abstand zwischen dem Sender 10 und dem Empfänger 12 möglichst klein zu halten, um Störungen bei der Messung zu vermeiden.

Auf dem zu prüfenden Werkzeug 20 wird ein Prüfbereich 32 festgelegt. Die Lage und Abmessungen des Prüfbereichs 32 hängen von der jeweiligen Werkzeuggeometrie und von mit diesem Werkzeug durchgeführten Bearbeitungsschritten ab. Zur Durchführung des Verfahrens ist es notwendig, dass der Prüfbereich 32 in den Messbereich 30 eintaucht. Hierzu wird das Werkzeug 20 aus einer Position, in der sich der Prüfbereich 32 außerhalb des Messbereichs 30 befindet, wie in Fig. 1 dargestellt ist, in eine Position verfahren, in der der Prüfbereich 32 in dem Messbereich 30 liegt, wie in Fig. 2 zu sehen ist. In den Fig. 1 und 2 wird das Werkzeug 20 und somit der Prüfbereich 32 in einer parallel zur Längsachse des Werkzeugs 20 verlaufenden Richtung verfahren, so dass der Prüfbereich 32 in den Messbereich 30 eintaucht. In Abhängigkeit von der Werkzeugmaschine, die ein zu prüfendes Werkzeug trägt, der Anordnung des Meßsystems in der Werkzeugmaschine, der Art des zu prüfenden Werkzeugs und der Lage und Abmessung eines festgelegten Prüfbereichs ist die Art der Bewegung des zu prüfenden Werkzeugs für jeden Anwendungsfall zu definieren. Die Art der Bewegung des Werkzeugs 20 spielt bei der Ausführung des Prüfverfahrens keine Rolle, es ist nur zu gewährleisten, dass der Prüfbereich 32 in den Messbereich 30 eintaucht.

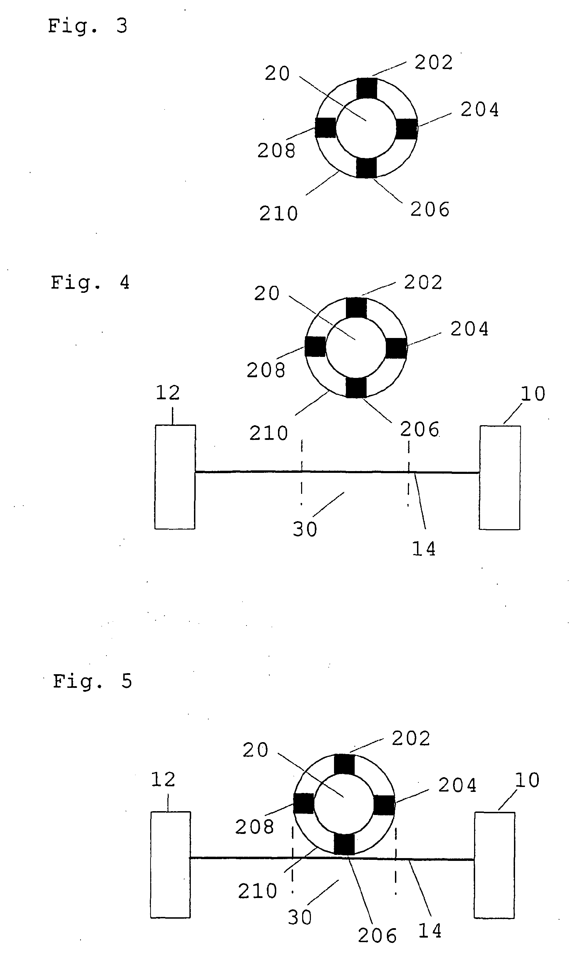

In Fig. 3 ist eine vereinfachte Darstellung einer Querschnittsansicht auf den Prüfbereich 32 des Werkzeugs 20 gezeigt. In diesem Fall weist das Werkzeug 20 vier Schneiden 202, 204, 206, 208 auf, die überprüft werden sollen. Zur Durchführung des Verfahrens ist es notwendig, dass das Werkzeug 20 mit einer gewünschten, konstanten Drehzahl gedreht wird, bevor und/oder während.der Prüfbereich 32 in den Messbereich 30 eintaucht, und sich der Prüfbereich 32 in dem Messbereich 30 befindet. Aufgrund der Drehung des Werkzeugs 20 entsteht eine den Prüfbereich 32 umhüllende Hüllfläche 210. Die Bewegung des Werkzeugs 20 aus einer Position, in der der Prüfbereich 32 außerhalb des Messbereichs 30 liegt, wie in Fig. 4 gezeigt ist, wird beendet, sobald die Hüllfläche 210 in den Messbereich eintaucht, wie in Fig. 5 gezeigt ist.

Vorzugsweise wird der Messstrahl 14 verwendet, um das Eintauchen der Hüllfläche 210 in den Messbereich 30 zu detektieren. Es ist beispielsweise aber auch möglich, das Eintauchen der Hüllfläche 210 in den Messbereich 30 aus der relativen Lage des Werkzeugs 20 zu dem Messstrahl 14 zu ermitteln. Wird der Messstrahl 14 zur Detektion des Eintauchens der Hüllfläche 210 in den Messbereich 30 verwendet, wird Messstrahl 14 blockiert, sobald eine der Schneiden 202, 204, 206, 208 in den Messbereich 30 eintaucht, so dass der Empfänger 12 den Messstrahl 14 nicht mehr empfängt. Der Empfänger 12 detektiert die Unterbrechung des Messstrahls 14 und erzeugt ein Signal, das diese Unterbrechung angibt.

Vorzugsweise gibt der Empfänger 12 in diesem Fall ein impulsartiges Signal ab, aber es ist jedes bekannte Signal verwendbar, das eine Unterbrechung des Messstrahls 14 angibt. Dieses Signal wird von dem Empfänger 12 entweder direkt an die Steuereinheit 16 des Meßsystems oder über die Auswerteeinheit 18 an diese weitergegeben.

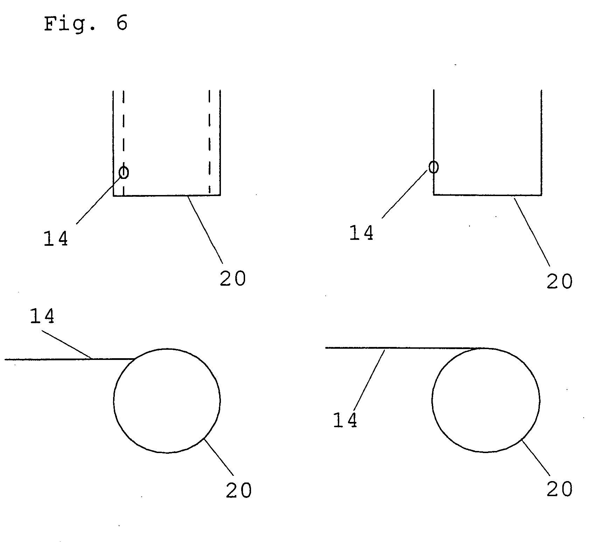

Die Steuereinheit 16 gibt dann ein Signal an die Steuerung 26 der Werkzeugmaschine aus. In Antwort auf dieses Signal beendet die Steuerung 26 die Verfahrbewegung des Werkzeugs 20. Liegt der zu prüfende Bereich 32 des Werkzeugs 20 auf einer äußeren Oberfläche desselben, wird die Verfahrbewegung unmittelbar nach Erhalt des von der Steuereinheit 16 ausgegebenen Signals beendet. Im Gegensatz dazu wird die Verfahrbewegung nach Erhalt des von der Steuereinheit 16 ausgegebenen Signals erst nach einer vorbestimmten Zeitdauer oder einer vorbestimmten zusätzlichen Wegstrecke beendet, wenn der Prüfbereich 32 des Werkzeugs 20 nicht auf einer äußeren Oberfläche desselben, sondern "im" Werkzeug liegt. Die resultierenden Positionen des Werkzeugs 20 relativ zu dem Messbereich 30 bzw. dem Messstrahl 14 für diese unterschiedlichen Fälle sind in Fig. 6 skizziert.

Aufgrund der Drehung des Werkzeugs 20 tauchen die Schneiden 202, 204, 206, 208 nacheinander in den Messbereich 30 ein und unterbrechen dabei den Messstrahl 14. Der zeitliche Abstand der Unterbrechungen des Messstrahls 14 durch die Schneiden 202, 204, 206, 208 ist hier gleich und konstant, da sich das Werkzeug 20 mit einer konstanten Drehzahl dreht und der Abstand zwischen den Schneiden 202, 204, 206, 208 gleich ist.

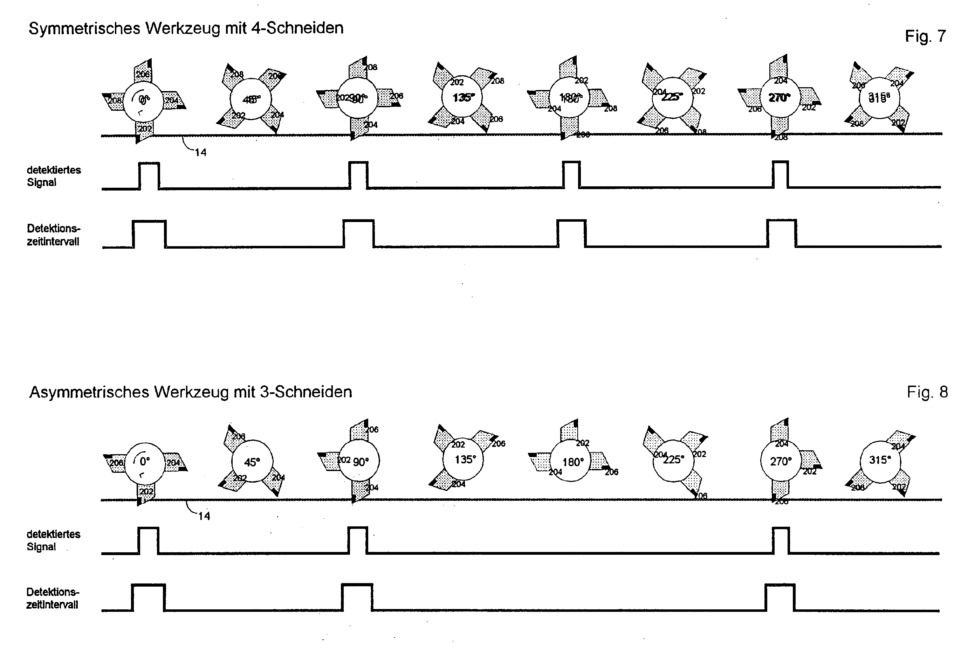

Diese Art der Unterbrechung des Messstrahls 14 führt dazu, dass der Empfänger 12 Signale, wie sie beispielhaft in Fig. 7 dargestellt sind, abgibt. In Fig. 7 ist der von dem Empfänger 12 erzeugte Signalverlauf sowie die entsprechenden Positionen des Werkzeugs 20 in dem Messbereich 30, genauer die relative Lage der Schneiden 202, 204, 206, 208 zu dem Messstrahl 14, gezeigt. Eine Beschädigung oder ein vollständiges Fehlen einer der Schneiden würde dazu führen, dass der Empfänger 12 an einem Zeitpunkt, einem sogenannten Soll-Zeitpunkt, an dem zu erwarten ist, dass eine Schneide den Messstrahl unterbricht, kein Signal erzeugt, da die beschädigte oder fehlende Schneide keine Unterbrechung des Messstrahls 14 verursacht.

Demgegenüber würde der Empfänger 12 auch ein Signal erzeugen, wenn die Unterbrechung des Messstrahls 14 nicht auf eine Unterbrechung durch eine der Schneiden zurückzuführen ist, sondern andere Gründe hat. Dies ist der Fall, wenn beispielsweise Kühlflüssigkeit oder Späne in den Messbereich 30 eintauchen und den Messstrahl 14 unterbrechen. Die Auswertung eines solchen Signals kann zu Fehlmessungen und somit zu einer fehlerhaften Überprüfung des Werkzeugs 20 führen.

Um einerseits diese Art von Fehlmessungen zu vermeiden und um andererseits die Schneiden 202, 204, 206, 208 zu überprüfen, werden die von dem Empfänger 12 erzeugten und an die Auswerteeinheit 18 weitergeleiteten Signale nur während gewählter Detektions-Zeitintervalle ausgewertet, die jeweils einen Soll-Zeitpunkt umfassen, an dem zu erwarten ist, dass eine der Schneiden 202, 204, 206, 208 den Messstrahl 14 unterbricht. Hierbei werden Detektions-Zeitintervalle verwendet, die sich zeitlich nicht überschneiden und den jeweiligen Soll-Zeitpunkt mit nur geringem zeitlichen Überschuss symmetrisch umfassen.

Detektiert die Auswerteeinheit 18 ein Fehlen eines Signals während dieser Detektions-Zeitintervalle, kann daraus geschlossen werden, dass eine der Schneiden 202, 204, 206, 208 fehlt oder beschädigt ist, d.h. Abmessungen hat, die nicht den erforderlichen Abmessungen entsprechen.

Die Vorgehensweise bei der Auswertung der von dem Empfänger 12 erzeugten Signale vermeidet die oben beschriebenen Fehlmessungen, da Signale nicht erfasst und ausgewertet werden, die nicht auf eine Unterbrechung des Messstrahls 14 durch eine der Schneiden 202, 204, 206, 208 zurückzuführen sind, da sie außerhalb der Detektions-Zeitintervalle liegen und somit auch nicht durch das Werkzeug verursacht werden können.

Das Verfahren eignet sich auch zur Prüfung unregelmäßig gestalteter Werkzeuge. Weist das zu prüfende Werkzeug 20 beispielsweise unregelmäßig beabstandete Schneiden 202, 204, 206 auf, wie in Fig. 8 zu sehen ist, erzeugt der Empfänger 12 Signale, deren zeitliche Abstände unterschiedlich sind. Ein solcher unregelmäßiger, als beispielhaft zu verstehender Signalverlauf ist in Fig. 8 gezeigt. Auch in diesem Fall werden von der Auswerteeinheit 18 Signale des Empfängers 12 nur während der Detektions-Zeitintervalle ausgewertet, die jeweils einen Soll-Zeitpunkt umfassen, an dem zu erwarten ist, dass eine der Schneiden 202, 204, 206 den Messstrahl 14 unterbricht.

Zur Durchführung des Prüfverfahrens ist es daher notwendig, die Auswertung der Signale des Empfängers 12 synchronisiert mit der Drehung des Werkzeugs 20 und in Abhängigkeit der Werkzeuggeometrie durchzuführen. Hierfür erhält die Steuereinheit 16 z.B. von der Steuerung 26 der Werkzeugmaschine Informationen, die die Drehzahl und die Gestalt (z.B. Teilung) des aktuell verwendeten Werkzeugs betreffen. Alternativ dazu greift Steuereinheit 16 auf die Gestalt (z.B. Teilung) des aktuell verwendeten Werkzeugs betreffende Daten zu, die in der Steuereinheit 16 einprogrammiert oder in einem nicht gezeigten Speicher gespeichert sind. Hierbei können die Informationen, die die Drehzahl des Werkzeugs betreffen, von Steuerung 26 an die Steuereinheit 16 übermittelt werden. Um einen möglichst einfachen Aufbau der Prüfvorrichtung zu ermöglichen, ist es auch möglich, das Werkzeug 20 bei der Prüfung mit einer zuvor definierten konstanten Drehzahl zu drehen, wobei Daten, die diese Drehzahl angeben, in der Steuereinheit 16 einprogrammiert sind oder in dem nicht gezeigten Speicher zum Zugriff durch die Steuereinheit 16 gespeichert sind. Dadurch entfällt die Notwendigkeit, Informationen hinsichtlich der Drehzahl des Werkzeugs und/oder der Gestalt (z.B. Teilung) des aktuell verwendeten Werkzeugs an die Steuereinheit 16 zu übermitteln.

Aus diesen Informationen errechnet die Steuereinheit 16 die Soll-Zeitpunkte, an denen das Werkzeug 20 den Messstrahl 14 unterbricht, wenn es die gewünschte Teilung, d.h. die Soll-Teilung, aufweist. Die Steuereinheit 16 steuert nun die Auswerteeinheit 18 so, dass sie nur Signale des Empfängers 12 während der Detektions-Zeltintervalle auswertet. Um zu gewährleisten, dass die Auswerteintervalle der Auswerteeinheit 18 die Zeitpunkte umfassen, an denen gewünschte Unterbrechungen des Messstrahls 14 aufgrund der Drehung des Werkzeugs 20 auftreten sollen, muss das Meßsystem mit der Drehung des Werkzeugs 20 synchronisiert werden. Im folgenden wird die hier gewählte Synchronisation beschrieben.

Bei der Synchronisation der Auswerteeinheit 18 mit dem sich drehenden Werkzeug 20 werden in einem dem eigentlichen Messvorgang vorgelagerten Schritt alle vom Empfänger 12 erzeugten Signale von der Auswerteeinheit 18 wie im folgenden erläutert ausgewertet. Alle von dem Empfänger 12 erhaltenen Signale werden von der Auswerteeinheit 18 hinsichtlich ihres zeitlichen Abstandes zueinander ausgewertet. Aufgrund der z.B. von der Steuereinheit 16 erhaltenen Informationen sind der Auswerteeinheit 18 die Abstände zwischen den Zeitpunkten bekannt, an denen der Empfänger 12 aufgrund einer gewünschten Unterbrechung des Messstrahls 14 ein Signal erzeugen sollte. Diese im folgenden als Soll-Zeitintervalle bezeichneten Zeitabstände können in Abhängigkeit der Geometrie des zu prüfenden Werkzeugs 20 gleich sein oder aus einer Folge unterschiedlicher Soll-Zeitintervalle bestehen. Die Auswerteeinheit 18 vergleicht nun die Zeitabstände aller von dem Empfänger 12 erhaltenen Signale mit dem Soll-Zeitintervall oder den Soll-Zeitintervallen.

Werden zwei Signale detektiert, deren zeitlicher Abstand einem Soll-Zeitintervall entspricht, kann daraus geschlossen werden, dass die zu diesen Impulsen führende Unterbrechung des Messstrahls 14 auf eine der Schneiden 202, 204, 206, 208 zurückzuführen ist. Um hierbei Fehler zu vermeiden, ist es zu bevorzugen, den Synchronisationsvorgang erst zu beenden, wenn mehr als zwei aufeinanderfolgende Signale detektiert wurden, deren jeweiliger zeitlicher Abstand dem Soll-Zeitintervall entspricht.

Wird im Falle einer unregelmäßigen Soll-Teilung eine Folge unterschiedlicher Soll-Zeitintervalle zum Vergleich verwendet, wird der Synchronisationsvorgang bevorzugterweise beendet, wenn die zeitlichen Abstände mehrerer aufeinanderfolgender Signale eine Folge aufweisen, die dieser gewünschten Folge entspricht. Die Prüfsicherheit kann hier dadurch erhöht werden, dass der Synchronisationsvorgang erst beendet wird, wenn wenigstens drei aufeinanderfolgende Signale detektiert werden, deren Folge zeitlicher Abstände zueinander einem Teil der Folge der Soll-Zeitintervalle entspricht.

Nachdem bei den oben beschriebenen Synchronisationabläufen das letzte Signal des Empfängers 12 in einem Soll-Zeitintervall detektiert wurde, wird der eigentliche Prüfvorgang in einem zeitlichen Abstand begonnen, der gewährleistet, dass die Detektions-Zeitintervalle alle Soll-Zeitpunkte umfassen.

Die Größen der Detektions-Zeitintervalle sind so zu dimensionieren, dass einerseits kein Signal des Empfängers 12 verloren geht, der auf eine gewünschte Unterbrechung des Messstrahls 14 zurückzuführen ist, und andererseits Signale nicht ausgewertet werden, die auf unerwünschte Unterbrechungen des Messstrahls 14 zurückzuführen sind. So ist bei der Dimensionierung der Detektions-Zeitintervalle unter anderem die Drehzahl des Werkzeugs 20, dessen Geometrie (z.B. Teilung) und eine gewünschte Qualität eines mit dem Werkzeug 20 durchzuführenden Bearbeitungsvorgangs vorzunehmen. Idealerweise werden die Detektions-Zeitintervalle so klein gewählt, dass sie die Soll-Zeitpunkte mit nur geringem Zeitüberschuss enthalten. Dies erfordert aber eine exakte und aufwendige Steuerung des Meßsystems, um keine Fehlmessungen zu erhalten. Daher sind die Größen der Detektions-Zeitintervalle in Abhängigkeit des jeweiligen Anwendungsfalls zu wählen.

Die Auswerteeinheit 18 führt die Detektion von Impulsen des Empfängers 12 während der Detektions-Zeitintervalle für eine festzulegende Detektionsdauer durch. Um zu gewährleisten, dass alle Schneiden 202, 204, 206, 208 des Werkzeugs 20 überprüft werden, sollte die Detektionsdauer so gewählt werden, dass jede der Schneiden 202, 204, 206, 208 wenigstens einmal in den Messbereich eintaucht. Das heißt, die Detektionsdauer sollte wenigstens der Dauer einer vollständigen Umdrehung des Werkzeugs 20 entsprechen. Eine erhöhte Zuverlässigkeit des erfindungsgemäßen Verfahrens kann erreicht werden, wenn eine längere Detektionsdauer gewählt wird, d.h. das Werkzeug für mehr als eine Umdrehung überprüft wird. Dabei ist zu berücksichtigen, dass bei der Wahl der Prüfdauer der eigentliche Betrieb der Werkzeugmaschine nicht wesentlich verlängert wird.

Detektiert die Auswerteeinheit 18 während der Detektionsdauer eine Anzahl von Signalen des Empfängers 12, die unter einer vorbestimmten Anzahl liegt, kann darauf geschlossen werden, dass eine der Schneiden 202, 204, 206, 208 fehlt oder beschädigt ist. Diese vorbestimmte Anzahl ist in Abhängigkeit der Detektionsdauer, der Geometrie bzw. Teilung des Werkzeugs 20, einer gewünschten Qualität und Zuverlässigkeit des Messverfahrens und anderer Faktoren festzulegen, die den Messvorgang beeinflussen. Wird eine Anzahl von Signalen des Empfängers 12 detektiert, die größer als die vorbestimmte Anzahl oder gleich groß ist, gibt die Auswerteeinheit 18 ein Signal aus, das angibt, dass die gesamte Prüfung des Werkzeugs erfolgreich war. Liegt die Anzahl der erfassten Signale unter der vorbestimmten Anzahl, gibt die Auswerteeinheit 18 ein Signal aus, das eine fehlgeschlagene Gesamtprüfung angibt.

Um den Prüfvorgang möglichst kurz zu gestalten, ist die Detektionsdauer so zu wählen, dass sie der Dauer einer vollständigen Umdrehung des Werkzeugs 20 entspricht. In diesem Fall kann darauf geschlossen werden, dass das Werkzeug 20 nicht beschädigt ist bzw. die gewünschte Geometrie aufweist, wenn die Anzahl der detektierten Signale der Anzahl der Schneiden entspricht. D.h. bei dem in Fig. 7 dargestellten Fall ist die Prüfung des Werkzeugs 20 erfolgreich, wenn vier Signale detektiert werden, während bei dem in Fig. 8 dargestellten Fall die Prüfung des Werkzeugs 20 erfolgreich ist, wenn drei Signale detektiert werden.

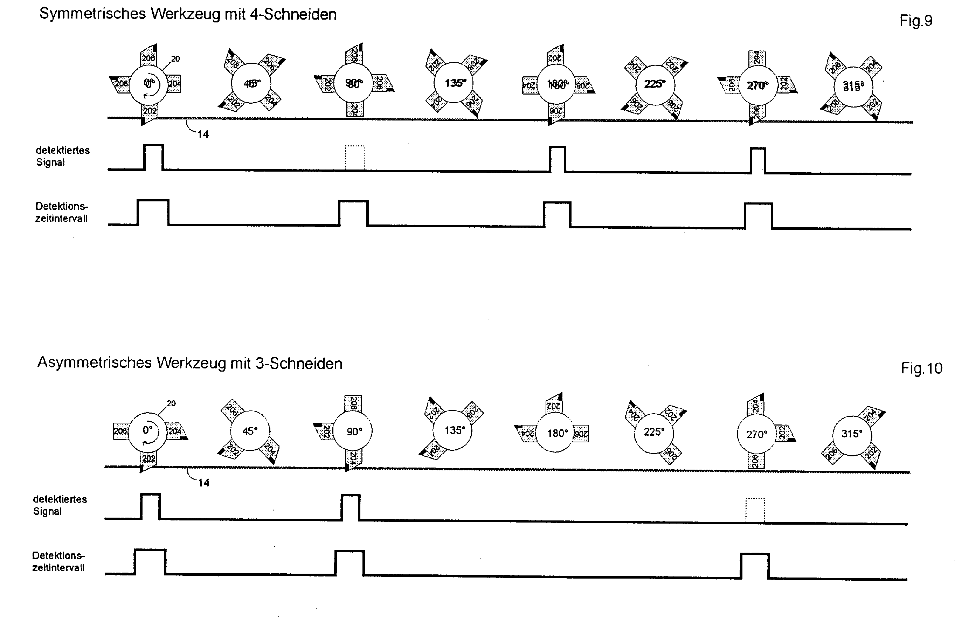

Werden bei dem in Fig. 7 dargestellten Fall weniger als vier Signale und dem in Fig. 8 dargestellten Fall weniger als drei Signale detektiert, ist die jeweilige Werkzeugprüfung fehlgeschlagen, d.h. eine der Schneiden fehlt oder ist beschädigt, wie dies in Figur 9 für die Schneide 204 und in Figur 10 für die Schneide 206 gezeigt ist. Somit werden zu den Zeitpunkten, die den jeweiligen Soll-Zeitpunkten für die fehlenden oder fehlerhaften Schneiden, nämlich den Schneiden 204 und 206 aus Fig. 9 bzw. 10, entsprechen, keine Signale detektiert, die eine Wechselwirkung des Messstrahls 14 mit dem zu prüfenden Bereich 32 angeben. Der Verlauf der hier detektierten Signale ist ebenfalls in den Fig. 9 und 10 skizziert, wobei die zu den Soll-Zeitpunkten erwarteten, aber nicht detektierten Signale gestrichelt dargestellt sind.

In der bisherigen Beschreibung wurde das Detektieren während der Detektions-Zeitintervalle durchgeführt, indem die Auswerteeinheit 18 Signale des Empfängers 12 nur während der die Soll-Zeitpunkte umfassenden Detektions-Zeitintervalle auswertet. Das Detektieren kann aber auch dadurch erreicht werden, indem der Sender 10 den Messstrahl 14 nur während der die Soll-Zeitpunkte umfassenden Detektions-Zeitintervalle aussendet. Dies wird ebenfalls erreicht, wenn der Empfänger 12 den Messstrahl 14 nur während der die Soll-Zeitpunkte umfassenden Detektions-Zeitintervalle detektiert. Die Überprüfung eines Werkzeugs kann unter Verwendung einer beliebigen Kombination dieser drei, zuletzt genannten Ausführungsformen durchgeführt werden.

Um einen möglichst flexiblen und anwendungsspezifischen Einsatz der Erfindung zu ermöglichen, ist es zu bevorzugen, dass die Steuereinheit 16 und/oder die Auswerteeinheit 18 programmierbare Einheiten umfassen. Unter Verwendung der programmierbaren Einheiten wird es möglich, das erfindungsgemäße Meßsystem auf die jeweilige verwendete Werkzeugmaschine, die verschiedenen zu prüfenden Werkzeuge und unterschiedlichste Prüfbedingungen anzupassen, ohne dabei das Meßsystem in seinem strukturellen Aufbau ändern zu müssen. Die programmierbaren Einheiten können z.B. aus Mikroprozessoren bestehen, die in der Steuereinheit 16 und/oder der Auswerteeinheit 18 integriert sind, in Form eines Rechnersystems zur Verfügung gestellt werden, das mit der Steuereinheit 16 und/oder der Auswerteeinheit 18 verbunden ist, oder durch beliebige Kombinationen davon gebildet werden.

## Patentansprüche

1. Verfahren zum Prüfen einer Schneidengeometrie eines drehantreibbaren Werkzeugs, mit einem Meßsystem, mit folgenden Schritten:
- Festlegen eines zu prüfenden Bereichs auf dem Werkzeug,
- Drehen des Werkzeugs mit einer gewählten Drehzahl,
- Aussenden eines Messstrahls, der einen Messbereich festlegt,
- Positionieren des Werkzeugs, so dass eine durch die Drehung entstehende Hüllfläche seines zu prüfenden Bereichs in den Messbereich eintaucht, und
- Detektieren von Signalen, die Wechselwirkungen des Messstrahls mit Hindernissen auf seinem Ausbreitungsweg angeben,
**dadurch gekennzeichnet, dass**
- Soll-Zeitpunkte bestimmt werden, an denen ein dem zu prüfenden Bereich entsprechender Bereich eines eine Soll-Teilung aufweisenden Referenzwerkzeugs während der Drehung in den Messbereich eintaucht,
- das Meßsystem anhand der Folge detektierter Signale mit der Drehung des Werkzeugs synchronisiert wird, und
- das Detektieren nachfolgend nur während gewählter Detektions-Zeitintervalle durchgeführt wird, die jeweils einen Soll-Zeitpunkt umfassen.

2. Verfahren nach Anspruch 1,
**dadurch gekennzeichnet, dass** die Detektions-Zeitintervalle so gewählt werden, dass sie sich nicht zeitlich überschneiden.

3. Verfahren nach Anspruch 1 oder 2,
**dadurch gekennzeichnet, dass** die Detektions-Zeitintervalle so gewählt werden, dass sie jeweils den entsprechenden Soll-Zeitpunkt symmetrisch umfassen.

4. Verfahren nach einem der Ansprüche 1 bis 3,
**dadurch gekennzeichnet, dass** die Detektions-Zeitintervalle so gewählt werden, dass sie jeweils den entsprechenden Soll-Zeitpunkt mit nur geringem Zeitüberschuss umfassen.

5. Verfahren nach einem der Ansprüche 1 bis 4,
**dadurch gekennzeichnet, dass** die Soll-Zeitpunkte und/oder die Detektions-Zeitintervalle in Abhängigkeit von der Drehzahl des Werkzeugs bestimmt werden.

6. Verfahren nach einem der Ansprüche 1 bis 5,
**dadurch gekennzeichnet, dass** die Soll-Zeitpunkte und/oder die Detektions-Zeitintervalle in Abhängigkeit von der Soll-Teilung bestimmt werden.

7. Verfahren nach einem der Ansprüche 1 bis 6,
**dadurch gekennzeichnet, dass** das Bestimmen der Soll-Zeitpunkte folgende Schritte umfasst:
- Bestimmen eines Soll-Zeitintervalls in Abhängigkeit von der Soll-Teilung des Werkzeugs und der gewählten Drehzahl, und
- Detektieren der Signale, die Wechselwirkungen des Messstrahls mit Hindernissen auf seinem Ausbreitungsweg angeben, wobei das Detektieren solange durchgeführt wird, bis wenigstens zwei aufeinanderfolgende Signale detektiert werden, deren zeitlicher Abstand mit dem Soll-Zeitintervall übereinstimmt.

8. Verfahren nach Anspruch 7,
**dadurch gekennzeichnet, dass**
- der zeitliche Abstand der Soll-Zeitpunkte dem Soll-Zeitintervall entspricht, und
- das Detektieren während der Detektions-Zeitintervalle nach einem letzten im Soll-Zeitintervall detektierten Signal begonnen wird.

9. Verfahren nach einem der Ansprüche 1 bis 6,
**dadurch gekennzeichnet, dass** das Bestimmen der Soll-Zeitpunkte folgende Schritte umfasst:
- Festlegen einer Folge von Soll-Zeitintervallen in Abhängigkeit von der Soll-Teilung des Werkzeugs, die wenigstens zwei festgelegte Soll-Zeitintervalle umfasst, und
- Detektieren der Signale, die Wechselwirkungen des Messstrahls mit Hindernissen auf seinem Ausbreitungsweg angeben, wobei das Detektieren solange durchgeführt wird, bis wenigstens zwei aufeinanderfolgende Signale detektiert werden, deren zeitlicher Abstand einem der Soll-Zeitintervalle entspricht.

10. Verfahren nach einem der Ansprüche 7 bis 9,
**dadurch gekennzeichnet, dass** das Detektieren kontinuierlich durchgeführt wird.

11. Verfahren nach Anspruch 9 oder 10,
**dadurch gekennzeichnet, dass**
- eine Folge der zeitlichen Abstände der Soll-Zeitpunkte der festgelegten Folge von Soll-Zeitintervallen entspricht und
- das Detektieren während der Detektions-Zeitintervalle nach dem letzten der in einem der Soll-Zeitintervalle detektierten Signale begonnen wird.

12. Verfahren nach einem der Ansprüche 1 bis 11,
**dadurch gekennzeichnet, dass** das Eintauchen der Hüllfläche des zu prüfenden Bereichs in den Messbereich unter Verwendung des Messstrahls detektiert wird.

13. Verfahren nach einem der Ansprüche 1 bis 12,
**dadurch gekennzeichnet, dass** in Antwort auf die detektierten Signale ein Ergebnissignal erzeugt wird, das ein summarisches Ergebnis der Prüfung der Schneidengeometrie angibt.

14. Verfahren nach Anspruch 13,
**dadurch gekennzeichnet, dass** ein Ergebnissignal erzeugt wird, das eine erfolgreiche summarische Prüfung der Schneidengeometrie angibt, wenn eine Anzahl der während der Detektions-Zeitintervalle detektierten Signale über einer vorbestimmten Anzahl liegt oder der vorbestimmten Anzahl entspricht.

15. Verfahren nach Anspruch 13,
**dadurch gekennzeichnet, dass** die Bestimmung der Soll-Zeitpunkte und das Detektieren erneut durchgeführt wird, wenn die Anzahl der während der Detektions-Zeitintervalle detektierten Signale unter der vorbestimmten Anzahl liegt.

16. Verfahren nach einem der Ansprüche 13 bis 15,
**dadurch gekennzeichnet, dass** ein Ergebnissignal erzeugt wird, das eine nicht erfolgreiche summarische Prüfung der Schneidengeometrie angibt, wenn die Anzahl der während der Detektions-Zeitintervalle detektierten Signale unter der vorbestimmten Anzahl liegt.

17. Verfahren nach einem der Ansprüche 1 bis 16,
**dadurch gekennzeichnet, dass** das Detektieren während der Detektions-Zeitintervalle für eine gewählte Detektionsdauer durchgeführt wird.

18. Verfahren nach einem der Ansprüche 1 bis 17,
**dadurch gekennzeichnet, dass**
- das Bestimmen der Soll-Zeitpunkte für eine gewählte Bestimmungsdauer durchgeführt wird, und/oder
- ein Ergebnissignal erzeugt wird, das eine nicht erfolgreiche Prüfung des Werkzeugs angibt, wenn die Bestimmung der Soll-Zeitpunkte länger als die gewählte Bestimmungsdauer durchgeführt wird.

19. Verfahren nach Anspruch 17 oder 18,
**dadurch gekennzeichnet, dass** die Detektionsdauer und/oder die Bestimmungsdauer in Abhängigkeit der Drehzahl des Werkzeugs und/oder in Abhängigkeit der Soll-Teilung bestimmt wird.

20. Verfahren nach einem der Ansprüche 1 bis 19,
**dadurch gekennzeichnet, dass** nach Ablauf der Prüfung das Verfahren gemäß einem der vorhergehenden Ansprüche wiederholt wird, um einen weiteren Bereich auf dem Werkzeug zu prüfen, wobei das Werkzeug relativ zu dem Messbereich so verfahren wird, dass eine durch die Drehung entstehende Hüllfläche des weiteren zu prüfenden Bereichs in den Messbereich eintaucht.

21. Verfahren nach einem der Ansprüche 1 bis 20,
**dadurch gekennzeichnet, dass** zusätzlich zur Drehung des Werkzeugs dasselbe gleichzeitig relativ zu dem Messbereich bewegt wird, so dass eine durch die Drehung und die Relativbewegung des Werkzeugs entstehende Hüllfläche des zu prüfenden Bereichs in den Messbereich eintaucht.

22. Meßsystem zum Prüfen einer Schneidengeometrie eines mit einer gewählten Drehzahl drehantreibbaren Werkzeugs, mit
- einem Sender zum Aussenden eines Messstrahls,
- einem Empfänger zum Empfangen des Messstrahls und zum Ausgeben von Signalen, die einen empfangenen Messstrahl angeben,
- einer mit dem Empfänger verbundenen Auswerteeinheit zum Empfangen der von dem Empfänger ausgegebenen Signale und zum Erzeugen von Signalen, die Wechselwirkungen des Messstrahls mit Hindernissen auf seinem Ausbreitungsweg angeben, in Abhängigkeit der empfangenen Signale und
- einer Steuereinheit zum Steuern des Meßsystems,
**dadurch gekennzeichnet, dass**
- die Auswerteeinheit die Signale des Empfängers nur während gewählter Auswerte-Zeitintervalle auswertet, die jeweils einen Soll-Zeitpunkt umfassen, an dem ein dem zu prüfenden Bereich entsprechender Bereich eines eine Soll-Teilung aufweisenden Referenzwerkzeugs während der Drehung in den Messstrahl eintaucht.

23. Meßsystem zum Prüfen einer Schneidengeometrie eines mit einer gewählten Drehzahl drehantreibbaren Werkzeugs, mit
- einem Sender zum Aussenden eines Messstrahls,
- einem Empfänger zum Empfangen des Messstrahls und zum Ausgeben von Signalen, die einen empfangenen Messstrahl angeben,
- einer mit dem Empfänger verbundenen Auswerteeinheit zum Empfangen der von dem Empfänger ausgegebenen Signale und zum Erzeugen von Signalen, die Wechselwirkungen des Messstrahls mit Hindernissen auf seinem Ausbreitungsweg angeben, in Abhängigkeit der empfangenen Signale und
- einer Steuereinheit zum Steuern des optischen Meßsystems,
**dadurch gekennzeichnet, dass**
- der Empfänger den Messstrahl nur während gewählter Empfangs-Zeitintervalle empfängt, die jeweils einen Soll-Zeitpunkt umfassen, an dem ein dem zu prüfenden Bereich entsprechender Bereich eines eine Soll-Teilung aufweisenden Referenzwerkzeugs während der Drehung in den Messstrahl eintaucht.

24. Meßsystem zum Prüfen einer Schneidengeometrie eines mit einer gewählten Drehzahl drehantreibbaren Werkzeugs, mit
- einem Sender zum Aussenden eines Messstrahls,
- einem Empfänger zum Empfangen des Messstrahls und zum Ausgeben von Signalen, die einen empfangenen Messstrahl angeben,
- einer mit dem Empfänger verbundenen Auswerteeinheit zum Empfangen der von dem Empfänger ausgegebenen Signale und zum Erzeugen von Signalen, die Wechselwirkungen des Messstrahls mit Hindernissen auf seinem Ausbreitungsweg angeben, in Abhängigkeit der empfangenen Signale und
- einer Steuereinheit zum Steuern des Meßsystems,
**dadurch gekennzeichnet, dass**
- der Sender den optischen Messstrahl nur während gewählter Sende-Zeitintervalle aussendet, die jeweils einen Soll-Zeitpunkt umfassen, an dem ein dem zu prüfenden Bereich entsprechender Bereich eines eine Soll-Teilung aufweisenden Referenzwerkzeugs während der Drehung in den Messstrahl eintaucht.

25. Meßsystem nach einem der Ansprüche 22 bis 24,
**dadurch gekennzeichnet, dass** die Auswerteeinheit und/oder die Steuereinheit wenigstens teilweise in dem Sender und/oder in dem Empfänger integriert sind.

26. Meßsystem nach einem der Ansprüche 22 bis 25,
**dadurch gekennzeichnet, dass** die Steuereinheit und/oder die Auswerteeinheit programmierbar sind.

27. Meßsystem nach einem der Ansprüche 22 bis 26,
**dadurch gekennzeichnet, dass** die Steuereinheit und/oder die Auswerteeinheit mit einer Steuerung einer das Werkzeug drehenden Maschine verbunden sind.

28. Meßsystem nach einem der Ansprüche 22 bis 27,
**dadurch gekennzeichnet, dass** der Messstrahl ein optischer Messstrahl, vorzugsweise ein Laserlichtstrahl ist.
